# EUROPEAN PATENT APPLICATION

(11) **EP 2 717 347 A1**
(43) Date of publication of application: **09.04.2014**
(21) Application number: 12461549.3
(22) Date of filing: 03.10.2012
(51) Int. Cl.: H01M 2/00, H01M 2/36

(54) **Rotary device for filling batteries with electrolyte and rotary method for filling batteries with electrolyte**

(71) Applicant: PPUH AUTOPART Jacek Bak Sp. z o.o., 39-300 Mielec (PL)
(72) Inventor: Larkin, Philip, 36035 Marano Vicentino (VI) (IT); CHIARENTIN, Roberto, 36046 Montegalda VI (IT); DISSEGNA, Ivan, 36061 Bassano del Grappa VI (IT)
(74) Representative: Klar, Miroslaw

(57) **Abstract**

Rotary device for filling batteries with electrolyte, equipped with filling heads and vacuum system assisting filling process, is characterized in that in three-dimensional frame a rotary table 2 is placed, containing at least four filling systems 3, consisting of battery fixing and leveling system 4, lowered and raised heads system 5, equipped with upper tanks 6 and metering valves 7, and where at the bottom of device entrance feeder 8 is located, connected with the first filling system 31, after which filling station 9 is placed, connected by tubes with electrolyte tank 19, and where at the bottom of device exit feeder 11 is located.

## Description

Subject of invention is rotary device for filling and/or leveling electrolyte in batteries and method for rotary filling and/or leveling electrolyte in batteries, especially in batteries production process, especially lead-acid.

In the known methods for filling and/or leveling electrolyte in lead-acid batteries, filling process is executed in devices by linear movement of batteries.

There is known, from Chinese patent description No CN 101373825, a device like mould injection machine, for filling batteries, in form of rotating disc. This invention is **characterized in that** there are on the disc four symmetrically located holes and a number of liquid injection tubes is fixed regularly side by side, through fixing plate. Fixing plate is embedded in the holes of rotating disc and a positioning plate is placed on upper side of battery. A number of liquid injection needles is fixed on positioning plate. Batteries are fixed to lower plate and elastic elements are located below the base. Vacuum box and pressing plate are connected with actuating cylinder, and sealing rings are located in vacuum box and pressing plate, and 90 degrees disc rotation is controlled every time.

There is known, from Japanese patent description No 6076913 rotary device for discharging electrolyte from automobile batteries.

Rotary device for filling batteries, according to invention, equipped with heads for filling and vacuum system for filling assistance, is **characterized in that** in the three-dimensional frame a rotational table is located, containing at least four filling systems, consisting of battery fixing and leveling system, and raised and lowered heads system, equipped with upper tanks and metering valves. At the bottom of device there is a feeder, connected with the first filling system, after which filling station is located, connected by tubes with electrolyte tanks. At the bottom of device exit feeder is located. Filling system may be equipped with vacuum system.

Entrance feeder is automatically controlled to position one or two kinds of batteries and exit feeder has a system of cylinders to remove and/or separate batteries.

Method for rotary filling of batteries with electrolyte, according to invention, is **characterized in that** a battery is moved by entrance feeder into filling system and after that it is fixe by fixing and leveling system. Next, filling system together with battery is moved to filling station, where electrolyte is delivered to tanks of heads system, and after that heads system is lowered above battery and electrolyte is delivered by metering valves to battery cells, beneficially by using vacuum system. Next, after checking level of electrolyte, battery is moved to further processing by exit feeder, in the same moment batteries are one by one delivered to rotary table.

Thanks to introduction of device according to invention, productivity has been significantly increased, by reduction of filling time, at the same moment better control of filling and/or electrolyte leveling process in particular battery is achieved. The device makes also possible to fill two or more batteries at the same moment as well as individual programming of filling parameters for each type of battery. Moreover there is a possibility to switch off at least one filling system when other filling system are working.

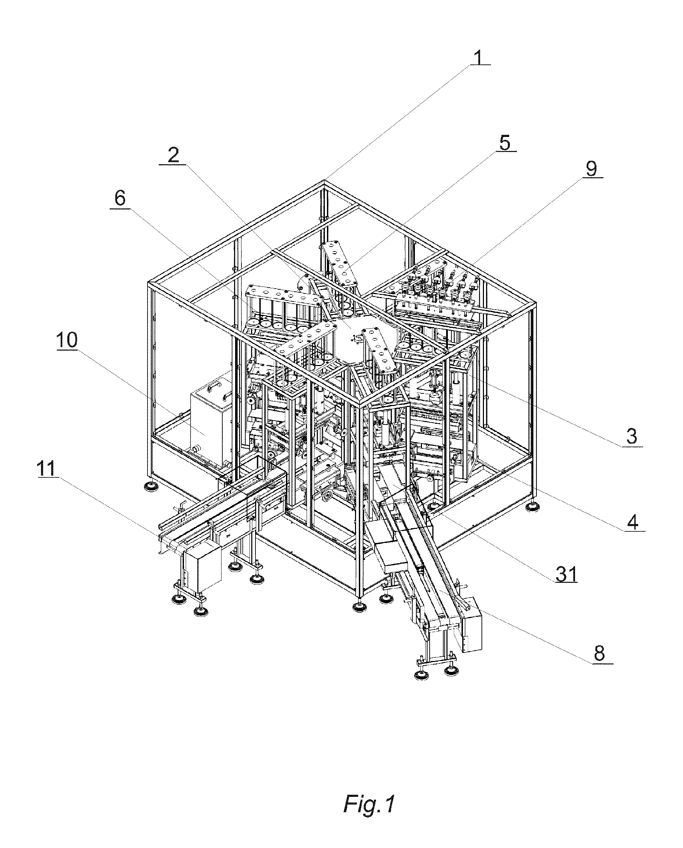

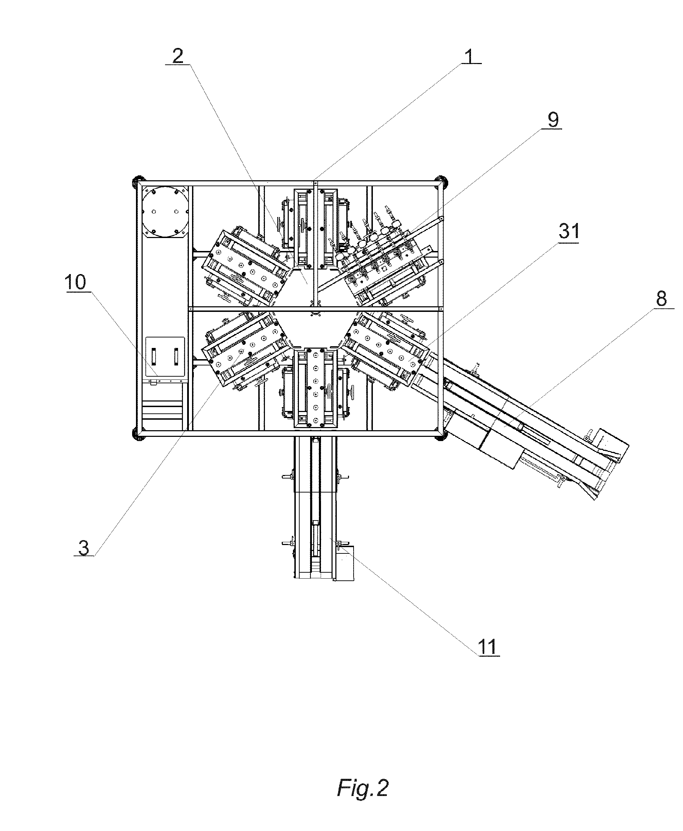

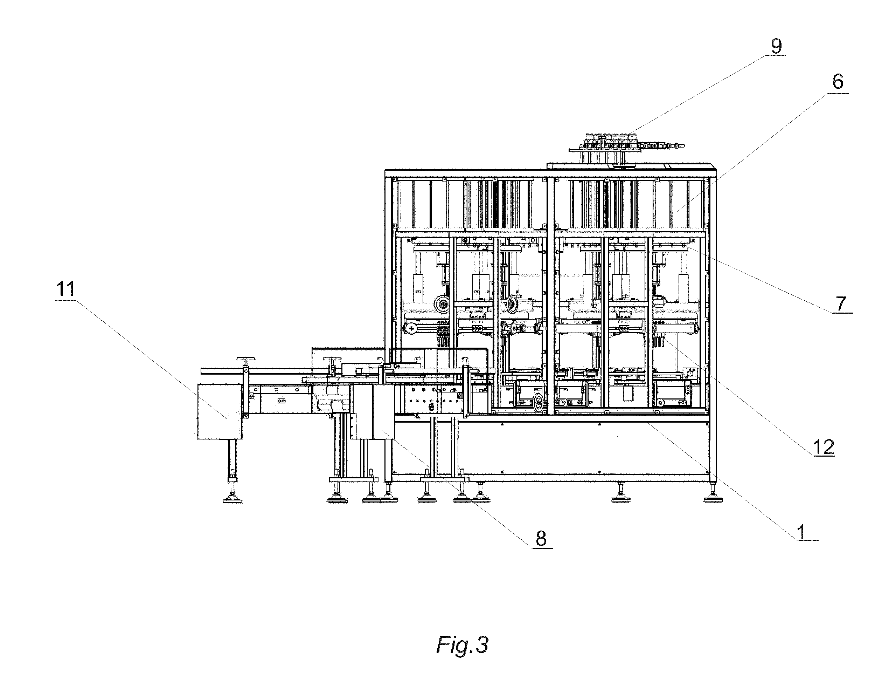

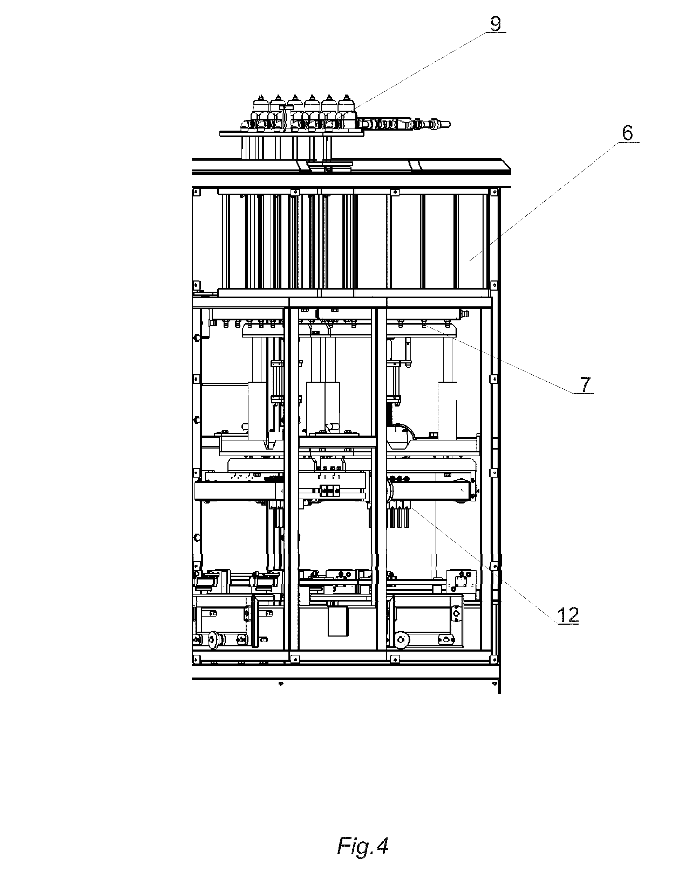

Invention is presented in example on the drawing where fig. 1 presents three-dimensional view of device, fig. 2 - upper view, fig. 3 - side view, fig. 4 - detail from fig. 3.

In three-dimensional frame 1, rotary table 2 is located, containing at least four filling systems 3, comprising battery fixing and leveling system 4, lowered and raised heads system 5, equipped with upper tanks 6 and metering valves 7. At the bottom of device entrance feeder 8 is located, connected with the first filling system 31, after which filling station 9 is located, connected by tubes with electrolyte tank 10, whereas at the bottom of device exit feeder 11 is located.

Filling system 3 is equipped with vacuum system 12.

Entrance feeder 8 is automatically controlled to position one or two types of batteries, and exit feeder 11 has a cylinder system to remove or separate batteries.

## Claims

1. Rotary device for filling batteries with electrolyte, equipped with filling heads and vacuum filling assistance, **characterized in that** in three-dimensional frame 1, rotary table 1 is located, having at least four filling systems 3, containing battery fixing and leveling system 4, lowered and raised heads system 5, equipped with upper tanks 6 and metering valves 7, and at the bottom of device entrance feeder 8 is located, connected with the first filling system 31, after which filling station 9 is placed, connected by tubes with electrolyte tank 19, whereas at the device bottom exit feeder 11 is located.

2. Rotary device for filling batteries with electrolyte, according to claim 1, **characterized in that** the filling system 3 is equipped with vacuum system 12.

3. Rotary device for filling batteries with electrolyte, according to claim 1, **characterized in that** the entrance feeder 8 is automatically controlled to position one or two kinds of batteries.

4. Rotary device for filling batteries with electrolyte, according to claim 1, **characterized in that** the exit feeder 11 has systems of cylinders for removal or separation of batteries.

5. Method for rotary filling batteries with electrolyte, **characterized in that** battery is moved by the entrance feeder 8 to filling system 3, next filling system 3 together with battery is moved to filling station 9, where tanks 6 of heads system are filled with electrolyte and after that heads system 5 is lowered to battery, where the electrolyte gets to battery cells through metering valves 7, beneficially using vacuum system 12, and after checking electrolyte level, battery is being moved for further processing by exit feeder 11, at the same moment, in each cycle batteries are delivered to rotary table
